# EUROPEAN PATENT SPECIFICATION

(11) **EP 4 125 001 B1**
(45) Date of publication and mention of the grant of the patent: **12.11.2025**
(21) Application number: 22164539.3
(22) Date of filing: 25.03.2022
(51) Int. Cl.: G06N 3/098, G06N 3/045, G06N 3/047, G06N 3/082, G06N 3/0464, G06N 3/09

(54) **MACHINE LEARNING PROGRAM, INFORMATION PROCESSING DEVICE, AND MACHINE LEARNING METHOD**
MASCHINENLERNPROGRAMM, INFORMATIONSVERARBEITUNGSVORRICHTUNG UND MASCHINENLERNVERFAHREN
PROGRAMME D'APPRENTISSAGE MACHINE, DISPOSITIF DE TRAITEMENT D'INFORMATIONS ET PROCÉDÉ D'APPRENTISSAGE MACHINE

(30) Priority: 26.07.2021 JP 2021121539
(43) Date of publication of application: 01.02.2023
(73) Proprietor: FUJITSU LIMITED, Kawasaki-shi, Kanagawa 211-8588 (JP)
(72) Inventor: TABUCHI, Akihiro, Kawasaki-shi, Kanagawa, 211-8588 (JP)
(74) Representative: Haseltine Lake Kempner LLP

(56) References cited:
- MOHAMMAD SHOEYBI ET AL: "Megatron-LM: Training Multi-Billion Parameter Language Models Using Model Parallelism", ARXIV.ORG, CORNELL UNIVERSITY LIBRARY, 201 OLIN LIBRARY CORNELL UNIVERSITY ITHACA, NY 14853, 17 September 2019 (2019-09-17), XP081485603
- ASPRI MARIA ET AL: "Distributed Training and Inference of Deep Learning Models for Multi-Modal Land Cover Classification", REMOTE SENSING, vol. 12, no. 17, 19 August 2020 (2020-08-19), CH, pages 1 - 21, XP055963162, ISSN: 2072-4292, DOI: 10.3390/rs12172670
- SRIVASTAVA NITISH ET AL: "Dropout: A Simple Way to Prevent Neural Networks from Overfitting", JOURNAL OF MACHINE LEARNING RESEARCH, vol. 15, 1 June 2014 (2014-06-01), pages 1929 - 1958, XP093195510, Retrieved from the Internet <URL:https://jmlr.org/papers/v15/srivastava14a.html> [retrieved on 20241107]

## Description

### FIELD

The embodiment discussed herein is related to a machine learning program, an information processing device, and a machine learning method.

### BACKGROUND

In recent years, in machine learning in a neural network, as a size of a machine learning model increases, increase in a speed of learning is required.

For example, in a simulation using CosmoFlow that estimates cosmological parameters from dark matter data, a data amount is 5.1 TB, and machine learning by a single V100 graphics processing unit (GPU) takes one week.

Furthermore, data parallelism that is a mainstream speed-up method in machine learning has a limit in terms of accuracy. In other words, for example, when parallelism is increased, a batch size increases, and there is a possibility that this adversely affects learning accuracy.

Therefore, in recent years, a model parallel method for dividing a machine learning model in a neural network and executing parallel processing by a plurality of computers has been known. Hereinafter, there is a case where the machine learning model in the neural network is simply referred to as a neural network model or a model.

By executing the parallel processing on each of the models created by dividing the neural network model by the plurality of computers, the learning accuracy is not affected, and it is possible to increase the speed of machine learning.

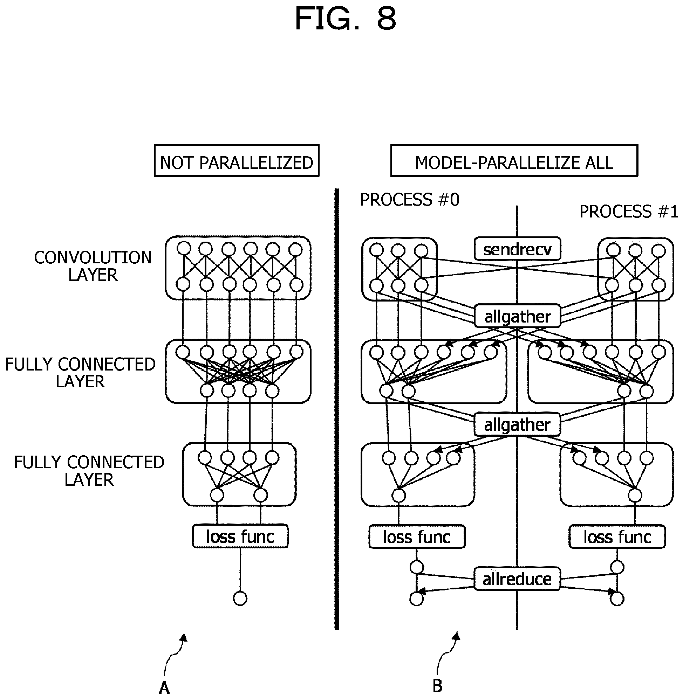

FIG. 8 is a diagram for explaining a traditional model parallel method in a neural network.

In FIG. 8, a reference A indicates a neural network model that is not parallelized. Furthermore, a reference B indicates a model parallelized neural network model and represents two (processes #0 and #1) models created by dividing a single model indicated by the reference A.

In the model parallelized neural network indicated by the reference B, all layers (layer) including a convolution layer and a fully connected layer of the neural network indicated by the reference A are divided and parallelized.

However, in the model parallelized neural network indicated by the reference B, before and after each layer, communication (allgather and allreduce) frequently occurs between the process #0 and the process #1. This increases a communication load and causes a delay or the like due to waiting for synchronization or the like.

Therefore, a method is considered for parallelizing only the convolution layer having a large calculation amount of the plurality of layers included in the neural network.

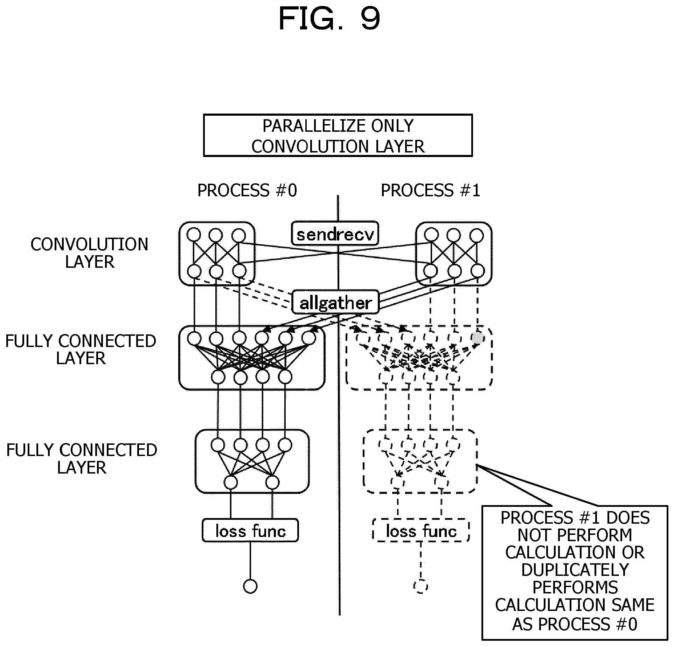

FIG. 9 is a diagram for explaining a traditional model parallel method in the neural network.

FIG. 9 illustrates a model parallelized neural network created on the basis of the neural network model that is not parallelized and indicated by the reference A in FIG. 8.

The neural network illustrated in FIG. 9 divides only the convolution layer of the neural network model that is not parallelized and indicated by the reference A in FIG. 8 into two. In other words, for example, processing of the convolution layer is executed by the processes #0 and #1 in parallel, and processing of the fully connected layer is executed by only the process #0.

Generally, regarding the processing of the convolution layer, although a calculation amount is large, only data exchange between adjacent portions is performed as communication. Therefore, there are few disadvantages caused by dividing the convolution layer. Furthermore, because the number of neurons in the fully connected layer at the subsequent stage is small, the calculation time does not increase even without parallelization, and there is a case where the speed of processing is higher than that when the model parallelization is performed.

Examples of the related art include as follows: Japanese National Publication of International Patent Application No. 2017-514251; and U.S. Patent Application Publication No. 2020/0372337.

Reference may be made to any of:
MOHAMMAD SHOEYBI ET AL: "Megatron-LM: Training MultiBillion Parameter Language Models Using Model Parallelism", ARXIV.ORG, CORNELL UNIVERSITY LIBRARY, 201 OLIN LIBRARY CORNELL UNIVERSITY ITHACA, NY 14853, 17 September 2019 (2019-09-17), presents techniques for training very large transformer models and implements a simple, efficient intra-layer model parallel approach that enables training transformer models with billions of parameters.
ASPRI MARIA ET AL: "Distributed Training and Inference of Deep Learning Models for Multi-Modal Land Cover Classification", REMOTE SENSING, vol. 12, no. 17, 19 August 2020 (2020-08-19), pages 1-21, CH, ISSN: 2072-4292, DOI: 10.3390/rs12172670, considers a novel multimodal DNN based on the Convolutional Neural Network architecture and explores several different ways to optimize its performance when training is executed on an Apache Spark Cluster; and
Srivastava Nitish ET AL: "Dropout: A Simple Way to Prevent Neural Networks from Overfitting", Journal of Machine Learning Research, vol. 15, 1 June 2014 (2014-06-01), pages 1929-1958, introcudes Dropout, a technique for addressing overfitting.

### SUMMARY

### TECHNICAL PROBLEM

However, in the traditional model parallelized neural network illustrated in FIG. 9, the process #1 does not execute the processing other than the convolution layer, which wastes calculation resources and is inefficient.

Furthermore, in the model parallelized neural network illustrated in FIG. 9, in order to share Loss that is finally calculated by the process #0 with the process #1, data communication from the process #0 to the process #1 is performed. In order to reduce a time period for the data communication, as in the process #0, it is considered to calculate Loss by performing calculation of each fully connected layer by the process #1. However, in this case, the same calculation of the fully connected layer is duplicately performed in the processes #0 and #1, and this is inefficient.

In one aspect, an object of the embodiment is to efficiently use calculation resources in machine learning of a plurality of distributed neural network models that is model parallel processed.

### SOLUTION TO PROBLEM

The present invention is defined by the independent claims, to which reference should now be made.

### ADVANTAGEOUS EFFECTS OF INVENTION

According to one embodiment, it is possible to efficiently use calculation resources in machine learning of a plurality of distributed neural network models that is model parallel processed.

### BRIEF DESCRIPTION OF DRAWINGS

FIG. 1 is a diagram schematically illustrating a hardware configuration of a computer system as an example of an embodiment;
FIG. 2 is a functional configuration diagram of a management device of the computer system as an example of the embodiment;
FIG. 3 is a conceptual diagram illustrating a neural network model generated by the computer system as an example of the embodiment;
FIG. 4 is a flowchart for explaining processing by a model management unit of the computer system as an example of the embodiment;
FIG. 5 is a diagram for explaining machine learning processing by a plurality of distributed models created by the computer system as an example of the embodiment;
FIG. 6 is a diagram for explaining machine learning processing by the plurality of distributed models created by the computer system as an example of the embodiment;
FIG. 7 is a diagram for explaining machine learning processing by the plurality of distributed models created by the computer system as an example of the embodiment;
FIG. 8 is a diagram for explaining a traditional model parallel method in a neural network; and
FIG. 9 is a diagram for explaining the traditional model parallel method in the neural network.

### DESCRIPTION OF EMBODIMENTS

Hereinafter, embodiments of a machine learning program, an information processing device, and a machine learning method will be described with reference to the drawings. Each drawing is not intended to include only components illustrated in the drawing and may include another function and the like.

### (A) Configuration

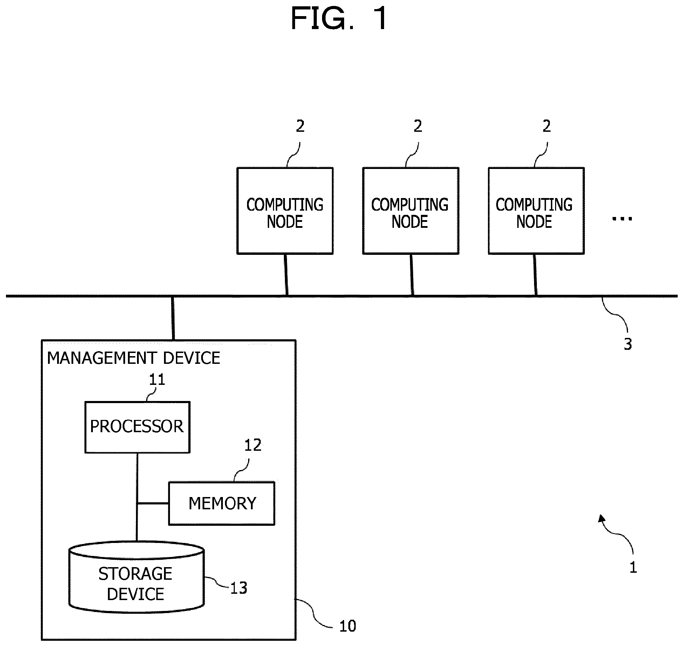

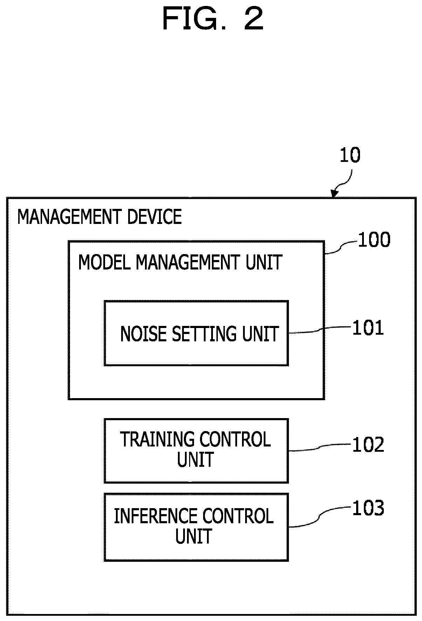

FIG. 1 is a diagram schematically illustrating a hardware configuration of a computer system 1 as an example of an embodiment, and FIG. 2 is a functional configuration diagram of a management device thereof.

As illustrated in FIG. 1, the computer system 1 includes a management device 10 and a plurality of computing nodes 2. The management device 10 and each computing node 2 are connected to be communicable with each other via a network 3. The network 3 is, for example, a local area network (LAN).

In the computer system 1, a machine learning model (neural network model) in a neural network is divided, and the plurality of computing nodes 2 realizes model parallel processing.

The computing node 2 is an information processing device (computer) including a processor and a memory (not illustrated) and executes a process assigned by the management device 10 to be described later. Each computing node 2 performs training of an assigned neural network model (machine learning), inference using the corresponding neural network model, or the like.

The management device 10 is, for example, an information processing device (computer) that has a server function and has a function for managing the neural network model.

As illustrated in FIG. 1, the management device 10 includes, for example, a processor 11, a memory 12, and a storage device 13.

The storage device 13 is a storage device such as a hard disk drive (HDD), a solid state drive (SSD), or a storage class memory (SCM) and stores various kinds of data.

The memory 12 is a storage memory including a read only memory (ROM) and a random access memory (RAM). In the ROM of the memory 12, a software program used to manage the machine learning model and data for this program are written. The software program used to manage the machine learning program includes a machine learning model.

The software program in the memory 12 is appropriately read and executed by the processor 11. Furthermore, the RAM of the memory 12 is used as a primary storage memory or a working memory.

The processor (processing unit) 11 controls the entire management device 10. The processor 11 may also be a multiprocessor. The processor 11 may also be, for example, any one of a central processing unit (CPU), a micro processing unit (MPU), a digital signal processor (DSP), an application specific integrated circuit (ASIC), a programmable logic device (PLD), and a field programmable gate array (FPGA). Furthermore, the processor 11 may also be a combination of two or more types of elements of the CPU, MPU, DSP, ASIC, PLD, and FPGA.

Then, the processor 11 executes a control program so as to function as a model management unit 100, a training control unit 102, and an inference control unit 103 illustrated in FIG. 2. The control program includes a machine learning program. The processor 11 executes this machine learning program so as to implement the function as the training control unit 102.

Note that the program (control program) for implementing the functions as the model management unit 100, the training control unit 102, and the inference control unit 103 is provided, for example, in a form recorded in a computer-readable recording medium such as a flexible disk, a compact disc (CD) (CD-ROM, CD-R, CD-rewritable (RW), or the like), a digital versatile disc (DVD) (DVD-ROM, DVD-RAM, DVD-recordable (R), DVD+R, DVD-RW, DVD+RW, high definition (HD) DVD, or the like), a Blu-ray disc, a magnetic disk, an optical disc, or a magneto-optical disk. Then, the computer reads the program from the recording medium, transfers the program to an internal storage device or an external storage device, and stores the program for use. Furthermore, for example, the program may also be recorded in a storage device (recording medium) such as a magnetic disk, an optical disc, or a magneto-optical disk, and provided from the storage device to the computer via a communication path.

When the functions as the model management unit 100, the training control unit 102, and the inference control unit 103 are implemented, a program stored in an internal storage device (memory 12 in the present embodiment) is executed by a microprocessor (processor 11 in the present embodiment) of a computer. At this time, the computer may also read and execute the program recorded in the recording medium.

The model management unit 100 manages the neural network model.

In the computer system 1, the neural network model is divided, and model parallel processing by the plurality of computing nodes 2 is realized.

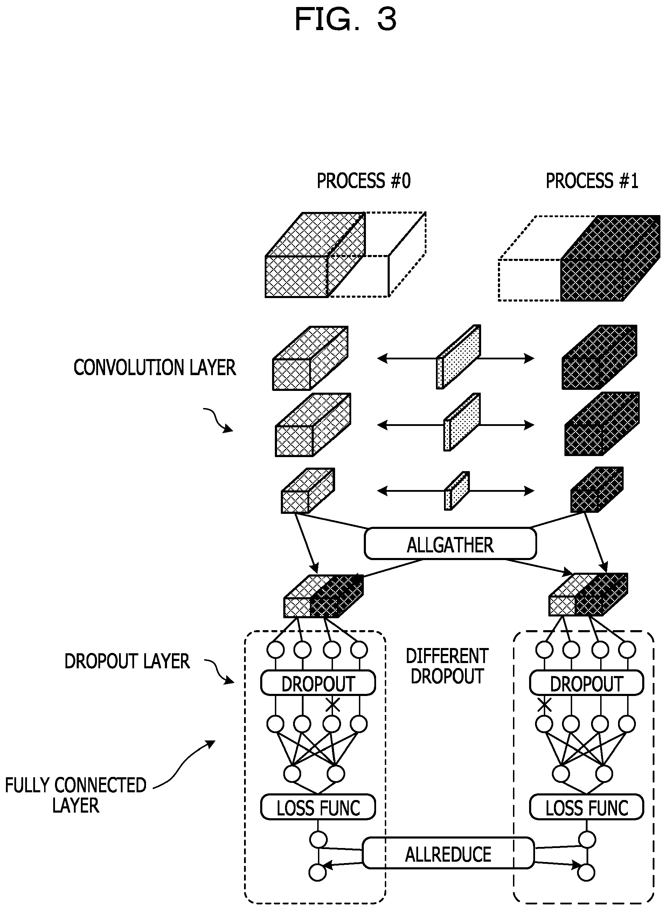

FIG. 3 is a conceptual diagram illustrating a neural network model generated by the computer system 1.

In the example illustrated in FIG. 3, two neural network models created by dividing a single neural network model are illustrated. Furthermore, in the neural network model illustrated in FIG. 3, only a convolution layer is divided and parallelized, and other layers are not parallelized.

Hereinafter, there is a case where each of the plurality of neural network models created by dividing the single neural network model is referred to as a distributed neural network model or a distributed model. Furthermore, the single neural network model before being divided may also be referred to as an original neural network model.

The respective created distributed models are processed by individual computing nodes 2. In other words, for example, each distributed model is processed as a different process. In FIG. 3, an example is illustrated in which two distributed models are generated and each of a process #0 and a process #1 processes the single distributed model.

Each distributed model illustrated in FIG. 3 includes a convolution layer and a fully connected layer. Furthermore, the fully connected layer includes a dropout layer.

The dropout layer suppresses overtraining by performing machine learning while inactivating (invalidating) a certain percentage of nodes. Note that, in the example illustrated in FIG. 3, the fully connected layer includes the dropout layer. However, the embodiment is not limited to this, and the dropout layer may also be included in the convolution layer or the like.

In the computer system 1, the dropout layer performs inactivation (invalidation) different between a plurality of processes (two in example illustrated in FIG. 3). Hereinafter, inactivating a specific node in the dropout layer may be referred to as adding noise. The dropout layer functions as a noise addition layer for adding noise to machine learning.

The model management unit 100 generates the parallelized neural network models as illustrated in FIG. 3. For example, the model management unit 100 adds noise, different from that to a dropout layer included in another distributed model, to each of the plurality of distributed models included in the parallelized neural network models.

The convolution layer in the original neural network is divided into a process #0 and a process #1 that are processed in parallel respectively by different computing nodes 2. In each distributed model, the convolution layer may also be referred to as a model parallelization unit. Furthermore, in each distributed model, the fully connected layer and the dropout layer, in which the parallel processing is not executed by the processes #0 and #1, may also be referred to as non-model parallelization unit. Moreover, a plurality of processes that executes the processing of the convolution layer in parallel may also be referred to as a model parallel process.

The non-model parallelization unit of each distributed model includes a processing block that executes the same processing. Such processing blocks are duplicately included in the non-model parallelization units of the plurality of distributed models. In this way, the processing blocks that are duplicately included in the non-model parallelization units of the plurality of distributed models may also be referred to as duplicated blocks. The duplicated block is a group of layers that executes duplicate processing without performing model parallelization between the processes that perform model parallelization. In each distributed model, the dropout layer is included in the duplicated block.

As illustrated in FIG. 2, the model management unit 100 has a function as a noise setting unit 101.

The noise setting unit 101 sets various parameters configuring the dropout layer so as to execute different dropout processing for each dropout layer of the plurality of distributed models.

For example, the noise setting unit 101 may also set a different percentage of node to be inactivated (hereinafter, referred to as dropout rate) for each distributed model. To set the dropout rate different for each distributed model, for example, arbitrary dropout rate may also be selected from among a plurality of types of dropout rates using random numbers for each dropout layer of each distributed model, and the selection may be appropriately changed and performed.

Furthermore, a noise setting method by the noise setting unit 101 is not limited to differ the dropout rate for each distributed model and can be appropriately changed and performed. For example, a node to be inactivated may also be different for each distributed model, or a probability of a dropout of an input element may also be different for each distributed model.

The noise setting unit 101 reads data configuring the distributed model and determines whether or not the dropout layer is included in the processing block of each layer configuring the corresponding distributed model. Then, in a case where the distributed model includes the dropout layer, parameters of the respective dropout layers are set so as to execute dropout processing different between the plurality of distributed models.

To set various parameters configuring the dropout layer so as to execute different dropout processing for each dropout layer of the plurality of distributed models may also be referred to as to set different noise for each model parallel process.

The noise setting unit 101 may also manage (store) the dropout processing (for example, dropout rate, node to be inactivated) set to each distributed model as actual achievement information, refer to this actual achievement information, and determine dropout processing to be set to each distributed model so that the dropout processing is not duplicated between the plurality of distributed models.

The training control unit 102 assigns each distributed model set by the model management unit 100 to each computing node 2 so as to make each distributed model perform training (machine learning).

According to an instruction for performing machine learning from the training control unit 102, the plurality of computing nodes 2 performs machine learning of the plurality of distributed neural network models created by dividing the original neural network in parallel.

Each distributed model assigned to each computing node 2 includes the dropout layer in a non-parallel block (duplicated block). Therefore, when each of the plurality of computing nodes 2 executes a process of machine learning of the distributed model, different noise is added in each non-parallel processing block (duplicated block, dropout layer).

The inference control unit 103 makes each computing node 2 perform inference by the distributed model.

### (B) Operation

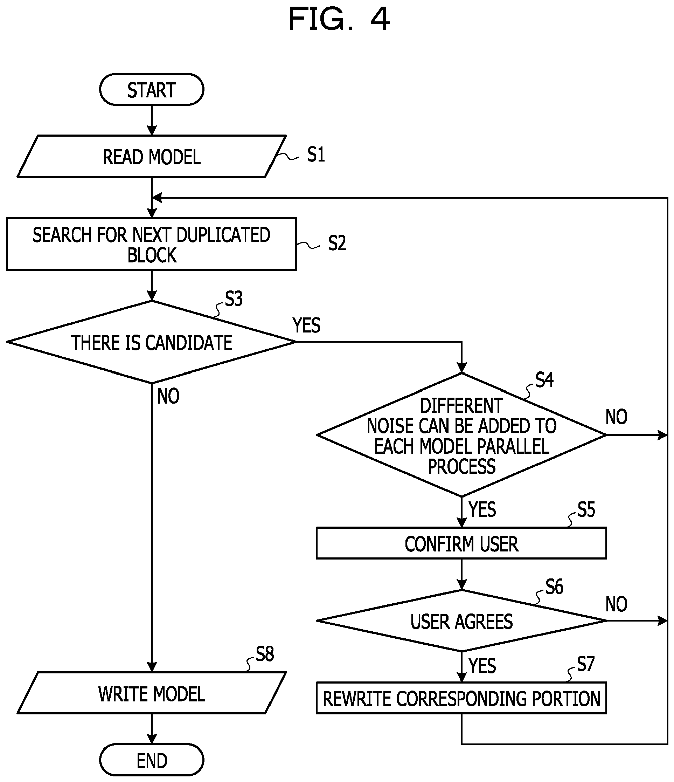

Processing by the model management unit 100 of the computer system 1 as an example of the embodiment configured as described above will be described according to the flowchart (steps S1 to S8) illustrated in FIG. 4.

In step S1, the model management unit 100 reads information configuring a distributed model created in advance. The model management unit 100 reads, for example, information of the plurality of distributed models created from the original neural network.

In step S2, the model management unit 100 selects one distributed model from among the plurality of read distributed models, confirms processing blocks from the beginning of the corresponding distributed model in order, and searches for the duplicated block duplicated between the plurality of distributed models (model parallel process).

In step S3, the model management unit 100 confirms whether or not there is a duplicated block (candidate), in a case where there is the duplicated block (refer to YES route in step S3), the procedure proceeds to step S4. In step S4, the noise setting unit 101 confirms whether or not the corresponding duplicated block can set the noise. In other words, for example, the noise setting unit 101 confirms whether or not the corresponding duplicated block is the dropout layer.

As a result of the confirmation, in a case where the corresponding duplicated block can set noise different for each model parallel process, in other words, for example, in a case where the duplicated block is the dropout layer (refer to YES route in step S4), the procedure proceeds to step S5.

In step S5, the noise setting unit 101 confirms a user whether or not to set noise different between the plurality of distributed models. For example, the noise setting unit 101 may also display a message inquiring of the user whether or not noise different between the plurality of distributed models may be set on a display (not illustrated) or the like.

The user may input a response to the inquiry using a mouse or a keyboard (both are not illustrated).

In step S6, the noise setting unit 101 confirms whether or not the user agrees to set the noise different between the plurality of distributed models. The noise setting unit 101 confirms, for example, whether or not the user has made an input indicating that the user agrees to set noise different between the plurality of distributed models using the mouse or the keyboard. As a result of the confirmation, in a case where the user does not agree to set the noise different between the plurality of distributed models (refer to NO route in step S6), the procedure returns to step S2.

On the other hand, in a case where the user agrees to set the noise different between the plurality of distributed models (refer to YES route in step S6), the procedure proceeds to step S7.

In step S7, the noise setting unit 101 sets (rewrite) parameters of the respective dropout layers corresponding to the corresponding dropout layer in the plurality of distributed models so that dropout processes different from each other are executed. Thereafter, the procedure returns to step S2.

Furthermore, in a case where it is not possible for the corresponding duplicated block to set noise as the result of the confirmation in step S4, in other words, for example, in a case where the corresponding duplicated block is not the dropout layer (refer to NO route in step S4), the procedure returns to step S2.

Furthermore, in a case where there is no duplicated block as the result of the confirmation in step S3 (refer to NO route in step S3), the procedure proceeds to step S8.

In step S8, information configuring each distributed model is written (stored) in a predetermined storage region such as the storage device 13. Thereafter, the procedure ends.

Note that, in the flowchart described above, the processing in steps S5 and S6 may also be omitted. In other words, for example, without confirming the user whether or not to set the noise different between the plurality of distributed models, the parameters of the respective corresponding dropout layers may also be rewritten in step S7 so that dropout processes different from each other are executed.

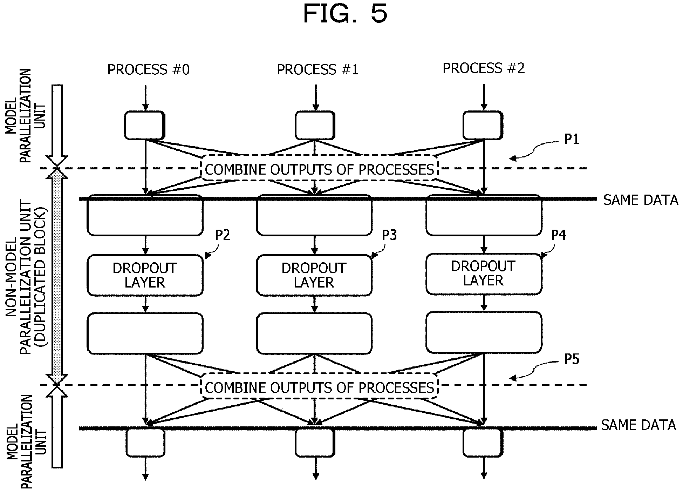

Next, machine learning processing by the plurality of distributed models created by the computer system 1 will be described with reference to FIGs. 5 to 7.

In FIGs. 5 to 7, an example is illustrated in which model parallelization for dividing an original neural network into three distributed models and processing the three distributed models by processes #0 to #2 is realized.

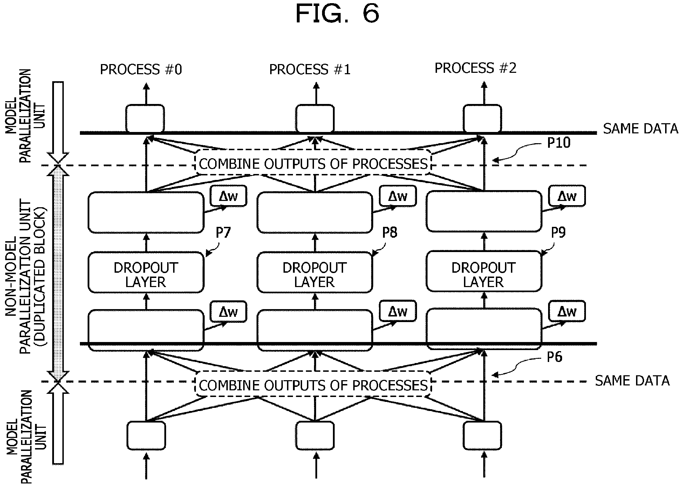

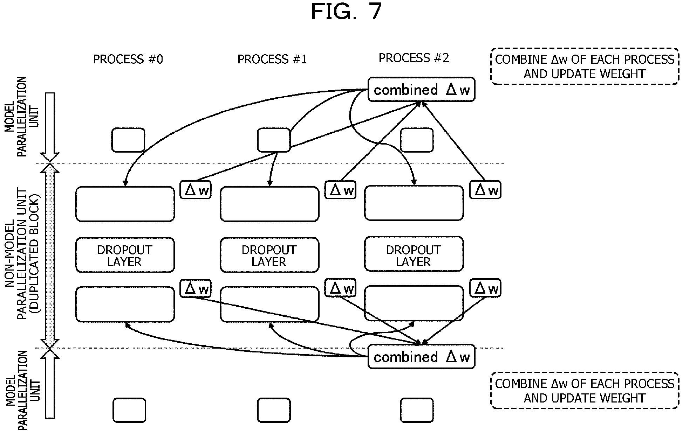

Note that, FIG. 5 illustrates forward propagation processing, FIG. 6 illustrates backpropagation processing, and FIG. 7 illustrates weight updating processing. Furthermore, a direction from the top to the bottom in FIG. 5 indicates a forward propagation data flow.

In the forward propagation, as illustrated in FIG. 5, outputs of the respective processes executed by the model parallelization units of the distributed models respectively executed by the respective processes #0 to #2 are combined (refer to reference P1). Each combined output is input to each non-model parallelization unit of the distributed model executed by each of the processes #0 to #2. The same data is input to each non-model parallelization unit of each distributed model.

In the example illustrated in FIG. 5, each non-model parallelization unit of each distributed model includes three processing blocks (duplicated block) including dropout layers (refer to references P2 to P4).

Furthermore, the different parameters are set to these three dropout layers by the noise setting unit 101 described above, and as a result, dropout rates of the respective dropout layers are different.

Therefore, in the processing blocks on the downstream side of these dropout layers in the non-model parallelization unit of each distributed model, outputs different from each other are obtained.

Furthermore, outputs of the respective processing blocks at the final stage of the non-model parallelization unit of each distributed model are combined (refer to reference P5).

Each combined output is input to each subsequent model parallelization unit in the distributed model executed by each of the processes #0 to #2. The same data is input to each non-model parallelization unit of each distributed model.

A direction from the bottom to the top in FIG. 6 indicates a backpropagation data flow direction.

In the backpropagation, as illustrated in FIG. 6, outputs of the respective processes executed by the model parallelization units of the distributed models respectively executed by the respective processes #0 to #2 are combined (refer to reference P6). Each combined output is input to each non-model parallelization unit of the distributed model executed by each of the processes #0 to #2. The same data is input to each non-model parallelization unit of each distributed model.

In the non-model parallelization unit of each distributed model, in each processing block (duplicated block) other than the dropout layer (refer to references P7 to P9), for example, using the gradient descent method, a weight Δw is calculated in a direction for reducing a loss function that defines an error between an inference result of the machine learning model with respect to the training data and correct answer data.

The different parameters are set to the respective dropout layers included in the non-model parallelization unit of each distributed model by the noise setting unit 101 described above, and as a result, dropout rates of the respective dropout layers are different.

Therefore, in the processing blocks on the downstream side of these dropout layers in the non-model parallelization unit of each distributed model, outputs different from each other are obtained.

Outputs of the respective processing blocks at the final stages of the non-model parallelization units of the respective distributed models are combined (refer to reference P10). Each combined output is input to each subsequent model parallelization unit in the distributed model executed by each of the processes #0 to #2. The same data is input to each non-model parallelization unit of each distributed model.

In the weight update, as illustrated in FIG. 7, each weight Δw calculated through backpropagation by the non-model parallelization unit of the distributed model executed by each of the processes #0 to #2 is combined, and the weight of each processing block is updated using the combined weight (combined Δw). The combination of the weights Δw may also be, for example, calculation of an average value and can be appropriately changed and performed.

### (C) Effects

In this way, according to the computer system 1 as an example of the embodiment, the noise setting unit 101 sets various parameters configuring the dropout layer so as to execute different dropout processing for each dropout layer of the plurality of distributed models.

As a result, at the time of machine learning, each process for processing the distributed model executes different dropout processing in each dropout layer of the non-model parallelization unit (duplicated block).

Therefore, by generating the noise by a method different for each process in the non-model parallelization unit for executing processing duplicated between the processes, the calculation resource can be efficiently used.

Furthermore, by adding different noise to each distributed model, it is possible to improve robustness of the distributed model that is processed in parallel and to improve learning accuracy.

The processing blocks included in the non-model parallelization unit are originally and duplicately processed in parallel by the plurality of processes (distributed model). Therefore, in the computer system 1, almost no increase in a calculation time occurs to execute the dropout processing by each of the plurality of processes for performing model parallelization. The learning accuracy can be improved.

### (D) Others

Each configuration and each processing of the present embodiment may also be selected or omitted as needed or may also be appropriately combined.

Then, the disclosed technology is not limited to the embodiment described above, and various modifications may be made and implemented within the scope of the invention as defined in the independent claims.

In the embodiment described above, the dropout layer is used as the duplicated block that can set noise. Embodiments not covered by the claimed invention are not limited to this and can be appropriately changed and executed.

Furthermore, the present embodiment may be implemented and manufactured by those skilled in the art according to the disclosure described above.

## Claims

1. A machine learning program of controlling machine learning of a plurality of distributed neural network models generated by dividing a neural network and executed respectively on a plurality of information processing devices (2) in parallel, the machine learning program comprising instructions which, when the program is executed by a computer, cause the computer to perform processing including:
adding, in each distributed neural network model of the plurality of distributed neural network models, an individual noise by a dropout layer (P2, P3, P4) of a non-parallel processing block in the distributed neural network model based on an individual parameter set to the dropout layer (P2, P3, P4) of the non-parallel processing block in the distributed neural network model, the individual parameter being set to the dropout layer (P2, P3, P4) such that the individual noise added by the dropout layer (P2, P3, P4) of the non-parallel processing block in the distributed neural network model is different from the individual noise added in other distributed neural network models; and
assigning the plurality of distributed neural network models added with the individual noise to a respective plurality of processes that are processed in parallel by the plurality of information processing devices to cause each of the plurality of processes to perform the machine learning on an assigned distributed neural network model from among the plurality of distributed neural network models added with the individual noise.

2. An information processing apparatus (1) of controlling machine learning of a plurality of distributed neural network models generated by dividing a neural network, the information processing apparatus (1) comprising:
a plurality of information processing devices (2) configured to execute the plurality of distributed neural network models in parallel; and
a processing unit (11) configured to:
add, in each distributed neural network model of the plurality of distributed neural network models, an individual noise by a dropout layer (P2, P3, P4) of a non-parallel processing block in the distributed neural network model based on an individual parameter set to the dropout layer (P2, P3, P4) of the non-parallel processing block in the distributed neural network model, the individual parameter being set to the dropout layer (P2, P3, P4) such that the individual noise added by the dropout layer (P2, P3, P4) of the non-parallel processing block in the distributed neural network model is different from the individual noise added in other distributed neural network models; and
assign the plurality of distributed neural network models added with the individual noise to a respective plurality of processes that are processed in parallel by the plurality of information processing devices to cause each of the plurality of processes to perform the machine learning on an assigned distributed neural network model from among the plurality of distributed neural network models added with the individual noise.

3. A computer-implemented method of controlling machine learning of a plurality of distributed neural network models generated by dividing a neural network and executed respectively on a plurality of information processing devices (2) in parallel, the method comprising:
adding, in each distributed neural network model of the plurality of distributed neural network models, an individual noise by a dropout layer (P2, P3, P4) of a non-parallel processing block in the distributed neural network model based on an individual parameter set to the dropout layer (P2, P3, P4) of the non-parallel processing block in the distributed neural network model, the individual parameter being set to the dropout layer (P2, P3, P4) such that the individual noise added by the dropout layer of the non-parallel processing block in the distributed neural network model is different from the individual noise added in other distributed neural network models; and
assigning the plurality of distributed neural network models added with the individual noise to a respective plurality of processes that are processed in parallel by the plurality of information processing devices to cause each of the plurality of processes to perform the machine learning on an assigned distributed neural network model from among the plurality of distributed neural network models added with the individual noise.

## Patentansprüche

1. Maschinenlernprogramm zur Steuerung des maschinellen Lernens einer Vielzahl von verteilten neuronalen Netzwerkmodellen, die durch Teilen eines neuronalen Netzwerks erzeugt und jeweils auf einer Vielzahl von Informationsverarbeitungsvorrichtungen (2) parallel ausgeführt werden, wobei das Maschinenlernprogramm Anweisungen umfasst, die bei Ausführung des Programms durch einen Computer den Computer veranlassen, eine Verarbeitung durchzuführen, die Folgendes umfasst:
Hinzufügen, in jedem verteilten neuronalen Netzwerkmodell der Vielzahl von verteilten neuronalen Netzwerkmodellen, eines individuellen Rauschens durch eine Dropout-Schicht (P2, P3, P4) eines nichtparallelen Verarbeitungsblocks im verteilten neuronalen Netzwerkmodell basierend auf einem individuellen Parameter, der für die Dropout-Schicht (P2, P3, P4) des nichtparallelen Verarbeitungsblocks im verteilten neuronalen Netzwerkmodell gesetzt ist, wobei der individuelle Parameter für die Dropout-Schicht (P2, P3, P4) so gesetzt ist, dass sich das durch die Dropout-Schicht (P2, P3, P4) des nichtparallelen Verarbeitungsblocks im verteilten neuronalen Netzwerkmodell hinzugefügte individuelle Rauschen von dem in anderen verteilten neuronalen Netzwerkmodellen hinzugefügten individuellen Rauschen unterscheidet; und
Zuweisen der Vielzahl von verteilten neuronalen Netzwerkmodellen, denen das individuelle Rauschen hinzugefügt wurde, zu einer jeweiligen Vielzahl von Prozessen, die von der Vielzahl von Informationsverarbeitungsvorrichtungen parallel verarbeitet werden, um zu bewirken, dass jeder der Vielzahl von Prozessen das maschinelle Lernen an einem zugewiesenen verteilten neuronalen Netzwerkmodell aus der Vielzahl von verteilten neuronalen Netzwerkmodellen, denen das individuelle Rauschen hinzugefügt wurde, durchführt.

2. Informationsverarbeitungsapparat (1) zur Steuerung des maschinellen Lernens einer Vielzahl von verteilten neuronalen Netzwerkmodellen, die durch Teilen eines neuronalen Netzwerks erzeugt werden, wobei der Informationsverarbeitungsapparat (1) umfasst:
eine Vielzahl von Informationsverarbeitungsvorrichtungen (2), die so konfiguriert sind, dass sie die Vielzahl von verteilten neuronalen Netzwerkmodellen parallel ausführen; und
eine Verarbeitungseinheit (11), die konfiguriert ist, um:
in jedem verteilten neuronalen Netzwerkmodell der Vielzahl von verteilten neuronalen Netzwerkmodellen ein individuelles Rauschen durch eine Dropout-Schicht (P2, P3, P4) eines nichtparallelen Verarbeitungsblocks im verteilten neuronalen Netzwerkmodell basierend auf einem individuellen Parameter hinzuzufügen, der für die Dropout-Schicht (P2, P3, P4) des nichtparallelen Verarbeitungsblocks im verteilten neuronalen Netzwerkmodell gesetzt ist, wobei der individuelle Parameter für die Dropout-Schicht (P2, P3, P4) so gesetzt ist, dass sich das durch die Dropout-Schicht (P2, P3, P4) des nichtparallelen Verarbeitungsblocks im verteilten neuronalen Netzwerkmodell hinzugefügte individuelle Rauschen von dem in anderen verteilten neuronalen Netzwerkmodellen hinzugefügten individuellen Rauschen unterscheidet; und
die Vielzahl von verteilten neuronalen Netzwerkmodellen, denen das individuelle Rauschen hinzugefügt wurde, einer jeweiligen Vielzahl von Prozessen zuzuweisen, die von der Vielzahl von Informationsverarbeitungsvorrichtungen parallel verarbeitet werden, um zu bewirken, dass jeder der Vielzahl von Prozessen das maschinelle Lernen an einem zugewiesenen verteilten neuronalen Netzwerkmodell aus der Vielzahl von verteilten neuronalen Netzwerkmodellen, denen das individuelle Rauschen hinzugefügt wurde, durchführt.

3. computerimplementiertes Verfahren zur Steuerung des maschinellen Lernens einer Vielzahl von verteilten neuronalen Netzwerkmodellen, die durch Teilen eines neuronalen Netzwerks erzeugt und jeweils auf einer Vielzahl von Informationsverarbeitungsvorrichtungen (2) parallel ausgeführt werden, wobei das Verfahren umfasst:
Hinzufügen, in jedem verteilten neuronalen Netzwerkmodell der Vielzahl von verteilten neuronalen Netzwerkmodellen, eines individuellen Rauschens durch eine Dropout-Schicht (P2, P3, P4) eines nichtparallelen Verarbeitungsblocks im verteilten neuronalen Netzwerkmodell basierend auf einem individuellen Parameter, der für die Dropout-Schicht (P2, P3, P4) des nichtparallelen Verarbeitungsblocks im verteilten neuronalen Netzwerkmodell gesetzt ist, wobei der individuelle Parameter für die Dropout-Schicht (P2, P3, P4) so gesetzt ist, dass sich das durch die Dropout-Schicht des nichtparallelen Verarbeitungsblocks im verteilten neuronalen Netzwerkmodell hinzugefügte individuelle Rauschen von dem in anderen verteilten neuronalen Netzwerkmodellen hinzugefügten individuellen Rauschen unterscheidet; und
Zuweisen der Vielzahl von verteilten neuronalen Netzwerkmodellen, denen das individuelle Rauschen hinzugefügt wurde, zu einer jeweiligen Vielzahl von Prozessen, die von der Vielzahl von Informationsverarbeitungsvorrichtungen parallel verarbeitet werden, um zu bewirken, dass jeder der Vielzahl von Prozessen das maschinelle Lernen an einem zugewiesenen verteilten neuronalen Netzwerkmodell aus der Vielzahl von verteilten neuronalen Netzwerkmodellen, denen das individuelle Rauschen hinzugefügt wurde, durchführt.

## Revendications

1. Programme d'apprentissage automatique permettant de commander l'apprentissage automatique d'une pluralité de modèles de réseau neuronal distribués, générés par division d'un réseau neuronal et exécutés respectivement sur une pluralité de dispositifs de traitement d'informations (2) en parallèle, le programme d'apprentissage automatique comprenant des instructions qui, lorsque le programme est exécuté par un ordinateur, amènent l'ordinateur à réaliser un traitement comportant :
l'ajout, dans chaque modèle de réseau neuronal distribué de la pluralité de modèles de réseau neuronal distribués, d'un bruit individuel par une couche d'abandon (P2, P3, P4) d'un bloc de traitement non parallèle dans le modèle de réseau neuronal distribué sur la base d'un paramètre individuel assigné à la couche d'abandon (P2, P3, P4) du bloc de traitement non parallèle dans le modèle de réseau neuronal distribué, le paramètre individuel étant assigné à la couche d'abandon (P2, P3, P4) de sorte que le bruit individuel ajouté par la couche d'abandon (P2, P3, P4) du bloc de traitement non parallèle dans le modèle de réseau neuronal distribué soit différent du bruit individuel ajouté dans d'autres modèles de réseau neuronal distribués ; et
l'attribution de la pluralité de modèles de réseau neuronal distribués auxquels le bruit individuel a été ajouté à une pluralité respective de processus qui sont traités en parallèle par la pluralité de dispositifs de traitement d'informations pour amener chacun de la pluralité de processus à réaliser l'apprentissage automatique sur un modèle de réseau neuronal distribué attribué parmi la pluralité de modèles de réseau neuronal distribués auxquels le bruit individuel a été ajouté.

2. Appareil de traitement d'informations (1) permettant de commander l'apprentissage automatique d'une pluralité de modèles de réseau neuronal distribués générés par division d'un réseau neuronal, l'appareil de traitement d'informations (1) comprenant :
une pluralité de dispositifs de traitement d'informations (2) configurés pour exécuter la pluralité de modèles de réseau neuronal distribués en parallèle ; et
une unité de traitement (11) configurée pour :
ajouter, dans chaque modèle de réseau neuronal distribué de la pluralité de modèles de réseau neuronal distribués, un bruit individuel par une couche d'abandon (P2, P3, P4) d'un bloc de traitement non parallèle dans le modèle de réseau neuronal distribué sur la base d'un paramètre individuel assigné à la couche d'abandon (P2, P3, P4) du bloc de traitement non parallèle dans le modèle de réseau neuronal distribué, le paramètre individuel étant assigné à la couche d'abandon (P2, P3, P4) de sorte que le bruit individuel ajouté par la couche d'abandon (P2, P3, P4) du bloc de traitement non parallèle dans le modèle de réseau neuronal distribué soit différent du bruit individuel ajouté dans d'autres modèles de réseau neuronal distribués ; et
attribuer la pluralité de modèles de réseau neuronal distribués auxquels le bruit individuel a été ajouté à une pluralité respective de processus qui sont traités en parallèle par la pluralité de dispositifs de traitement d'informations pour amener chacun de la pluralité de processus à réaliser l'apprentissage automatique sur un modèle de réseau neuronal distribué attribué parmi la pluralité de modèles de réseau neuronal distribués auxquels le bruit individuel a été ajouté.

3. Procédé mis en œuvre par ordinateur permettant de commander l'apprentissage automatique d'une pluralité de modèles de réseau neuronal distribués, générés par division d'un réseau neuronal et exécutés respectivement sur une pluralité de dispositifs de traitement d'informations (2) en parallèle, le procédé comprenant :
l'ajout, dans chaque modèle de réseau neuronal distribué de la pluralité de modèles de réseau neuronal distribués, d'un bruit individuel par une couche d'abandon (P2, P3, P4) d'un bloc de traitement non parallèle dans le modèle de réseau neuronal distribué sur la base d'un paramètre individuel assigné à la couche d'abandon (P2, P3, P4) du bloc de traitement non parallèle dans le modèle de réseau neuronal distribué, le paramètre individuel étant assigné à la couche d'abandon (P2, P3, P4) de sorte que le bruit individuel ajouté par la couche d'abandon du bloc de traitement non parallèle dans le modèle de réseau neuronal distribué soit différent du bruit individuel ajouté dans d'autres modèles de réseau neuronal distribués ; et
l'attribution de la pluralité de modèles de réseau neuronal distribués auxquels le bruit individuel a été ajouté à une pluralité respective de processus qui sont traités en parallèle par la pluralité de dispositifs de traitement d'informations pour amener chacun de la pluralité de processus à réaliser l'apprentissage automatique sur un modèle de réseau neuronal distribué attribué parmi la pluralité de modèles de réseau neuronal distribués auxquels le bruit individuel a été ajouté.
